# EUROPÄISCHE PATENTSCHRIFT

(11) **EP 0 519 429 B1**
(45) Veröffentlichungstag und Bekanntmachung des Hinweises auf die Patenterteilung: **26.11.1997**
(21) Anmeldenummer: 92110239.8
(22) Anmeldetag: 17.06.1992
(51) Int. Cl.: C08L 59/04, C08L 33/12, C08L 33/10, C08K 7/16, C08K 3/36, C08K 13/02, C08L 59/00

(54) **Polyoxymethylenzusammensetzung und ihre Verwendung**
Polyoxymethylene composition and its use
Composition de polyoxyméthylène et son utilisation

(30) Priorität: 21.06.1991 DE 4120490
(43) Veröffentlichungstag der Anmeldung: 23.12.1992
(73) Patentinhaber: HOECHST AKTIENGESELLSCHAFT, 65926 Frankfurt am Main (DE)
(72) Erfinder: Schleith, Oskar, W-6238 Hofheim am Taunus (DE); Sabel, Hans-Dieter, Dr., W-6240 Königstein/Ts. (DE)

(56) Entgegenhaltungen:
- EP-A- 0 300 573
- EP-A- 0 329 028
- EP-A- 0 342 000
- EP-A- 0 356 167
- DE-A- 2 129 522
- JP-A-51 039 746
- PATENT ABSTRACTS OF JAPAN vol. 13, no. 442 (C-641)3. Oktober 1989 & JP-A-11 70 641

## Beschreibung

Die Erfindung betrifft ein modifiziertes Polyoxymethylen, mit dem Formteile mit reduziertem Oberflächenglanz bzw. einer matten Oberfläche erzielt werden.

Polyoxymethylen (POM) ist ein hochwertiger Konstruktionswerkstoff und wird in vielen Bereichen der Technik eingesetzt. Zur Erweiterung der Anwendungen werden maßgeschneiderte Typen entwickelt, indem durch Zugabe von Additiven bestimmte physikalische Eigenschaften verbessert werden. Zum Beispiel werden im Automobilinnenraum aus ästhetischen, aber auch aus Sicherheitsgründen Werkstoffe gefordert, die einen reduzierten Oberflächenglanz an Formteilen wie Verkleidungen, Abdeckungen, Schaltern, Hebel usw. sicherstellen.

Soweit bisher Polyoxymethylene mit matter Oberfläche bekannt geworden sind, wird dieser Effekt durch Zugabe anorganischer Füllstoffe erreicht. Dies hat aber den Nachteil, daß dadurch andere Eigenschaften, vor allem mechanische, insbesondere die Zähigkeit, negativ beeinflußt werden.

Es sind auch Polyoxymethylene mit matter Oberfläche bekannt, bei denen dieser Effekt durch Zugabe von Polyurethanen erreicht wird. In diesem Fall werden jedoch relativ hohe Mengen an diesen Zuschlägen benötigt. Zwar hat dies nicht, wie bei den anorganischen Füllstoffen, eine Reduzierung der Zähigkeit zur Folge, aber es werden andere POM-typische Eigenschaften verschlechtert, z. B. Oberflächenhärte und Steifigkeit.

Unmodifiziertes Polyoxymethylen ergibt bei der Spritzgußverarbeitung Teile mit hohem Oberflächenglanz. Dieser ist in zahlreichen Fällen (Sichtteilen) sogar erwünscht und die Bestrebungen waren bisher überwiegend darauf gerichtet, durch entsprechende Verarbeitung einen hohen Glanz zu erzeugen.

Andererseits erhält man durch Mischen von Polyoxymethylen mit 10 bis 95 Gew.-% Styrol-Acrylnitril-Copolymer und/oder 10 bis 80 Gew.-% Acryl(co)polymer, beispielsweise Polymethylmethacrylat oder Styrol-Methylmethacrylat-Copolymer, Zusammensetzungen mit perlmuttartigem Glanz (JP-A-51039746).

Eine Reduzierung des Glanzgrades einer Oberfläche wird durch Vermindern der Oberflächenglätte und somit durch eine sich ändernde Lichtreflexion erzielt. Mattierung vermittelnde Additive, z.B. anorganische Füllstoffe wie Kreide, Talkum, Glimmer, Glaskugeln und -fasern oder organische hochmolekulare Substanzen wie thermoplastische Polyurethane wirken nach diesem Prinzip. Mit diesen Substanzen allein wird jedoch kein ausreichender Mattierungseffekt erzielt bzw. sie verändern zu stark andere physikalische Eigenschaften.

Mit dem in der Kunststoffindustrie als Antiblockingmittel verwendeten Natrium-Aluminiumsilikat sowie mit Siliciumdioxid lassen sich ebenfalls Mattierungseffekte erzielen. Beim Polyoxymethylen erhält man jedoch mit diesen eingearbeiteten Substanzen beim Spritzgießen sehr unruhige Oberflächen mit Verwirbelungen.

Weiterhin erfüllt zwar z. B. der Zusatz einer speziellen Aluminiumsilikatfaser die Anforderungen an ausreichende Glanzreduzierung und den Erhalt der mechanischen Eigenschaften von Polyacetalzusammensetzungen bzw. den daraus hergestellten Artikeln befriedigend (EP-A-0 342 000). Sie zeigen aber an der Oberfläche Fließmarkierungen und Wirbel, die in vielen Fällen unerwünscht sind. Die Faser besitzt außerdem arbeitsphysiologische Nachteile und wirft daher Probleme bei der Herstellung der Rohstoffe auf.

Es war daher wünschenswert, ein POM mit matter Oberfläche und einwandfreier Oberflächenbeschaffenheit ohne die obigen Nachteile zur Verfügung zu stellen, insbesondere sollten die POM-typischen Eigenschaften im wesentlichen erhalten bleiben.

Die Aufgabe wurde gelöst, indem durch Zusatz von bestimmten Acrylat(co)polymeren zu POM eine matte Oberfläche erzeugt wird, ohne die Härte, Steifigkeit und Zähigkeit des Acetalpolymers zu beeinträchtigen, was nicht vorauszusehen war.

Die Erfindung betrifft eine Polyoxymethylenzusammensetzung, die aus A) Polyoxymethylen und B) Acryl-(co)-polymerisat besteht.

Die Bezeichnung Polyoxymethylen ist charakterisiert durch wiederkehrende Oxymethylen-Gruppen und schließt alle über 50 % der wiederkehrenden Einheiten -CH₂O-enthaltende Polymere wie Polyoxmethylen-Homopolymere, -Copolymere, -Terpolymere usw. ein. Sie haben im allgemeinen einen Schmelzindex (MFI 190/2,16-Wert) von 2 bis 50.

In Frage kommende Acrylpolymere sind Polymethyl-, -ethyl- und -butylmethacrylate oder deren Mischungen bzw. das Copolymerisat aus Methylmethacrylat mit Styrol. Bevorzugt sind insbesondere Polymethylmethacrylat und das Copolymerisat aus Methylmethacrylat und Styrol.

Die Acryl(co)polymere werden im allgemeinen nach dem Masseverfahren hergestellt und liegen als Mahlkorn vor; aber auch die nach dem Suspensionsverfahren gewonnenen "Perlen" sind geeignet.

Im allgemeinen wird das Acryl(co)polymerisat in Mengen von 0,5 bis 10 Gew.-% - bezogen auf das Gesamtgemisch - dem Polyoxymethylen zugegeben. Vorzugsweise werden 1 bis 5 Gewichtsprozent eingesetzt. Die Zugabe des Acryl(co)polymers zum Polyoxymethylen unter 0,5 Gew.-% hat im allgemeinen keine ausreichende Glanzreduzierung zur Folge, während bei Zugabe von über 6 Gew.-% im allgemeinen eine Glanzreduzierung nur dann eintritt, wenn kleine Partikelgrößen eingesetzt werden.

Einen Einfluß auf den Mattierungsgrad hat auch die Teilchengröße der Polymerisate. Bei sehr kleinen Teilchen, z. B. < 50 µm, beginnt im allgemeinen eine Abnahme des Mattierungseffekts, der bei Teilchen unter 20 µm nicht mehr zu akzeptieren ist. Bei Teilchengrößen über 600 µm, z. B. 800 µm ist zwar der Mattierungsgrad gut, die Oberfläche dagegen ist unruhig. Bevorzugt werden daher mittlere Teilchengrößen von 20 bis 600 µm eingesetzt.

Weiterhin wurde gefunden, daß kleine Korngrößen - und dies steht konträr zum Mattierungseffekt - wesentlich zur Verbesserung der Oberflächenqualität an Spritzteilen beitragen. Aus diesem Grund werden zur Vermeidung von unruhigen Oberflächen an Spritzteilen besonders mittlere Teilchengrößen von 20 bis 300 µm bevorzugt.

Überraschend wurde gefunden, daß durch Zusatz von Siliciumdioxid, z. B. in Konzentrationen 0,1 bis 2 und bevorzugt in Konzentrationen von 0,5 bis 1 Gewichtsprozent, die Gleichmäßigkeit der Spritzteiloberfläche und Mattierungsgrad verbessert werden. Darüberhinaus kann die Menge des eingesetzten Acrylat(co)polymers verringert werden.

Die mittlere Agglomeratgröße der Siliciumdioxide beträgt 3 bis 15 µm und bevorzugt 3 bis 5 µm. Die Schlierenfreiheit und die mechanischen Eigenschaften der Zusammensetzungen gemäß der Erfindung bleiben dabei erhalten.

Siliciumdioxide allein mit einem Anteil unter 2 Gewichtsprozent im POM ergeben kaum Mattierungseffekte. Höhere Konzentrationen zeigen unruhige Spritzteiloberflächen.

Die Form der Polyoxymethylen/Acrylat(co)polymer-Zusammensetzung kann nach verschiedenen Methoden hergestellt werden, z. B. als Granulat durch Extrusion der Mischung oder durch die spätere Zugabe des Acryl(co)polymers als Konzentrat zum Polyoxymethylen.

Die Zusammensetzung kann zusätzlich in geringen Mengen übliche Zusätze wie Stabilisatoren einschließlich Formaldehydfänger, Antioxidantien, Lichtstabilisatoren, Gleitmittel, Farbstoffe, Pigmente und Ruß enthalten.

Auch andere Additive, z. B. verschiedene Arten von organischen hochmolekularen Substanzen oder anorganischen Füllstoffen in untergeordneten Mengen können als Mischung mit dem Acryl(co)polymerisat in das Polyoxymethylen eingearbeitet oder später als Konzentrat zugegeben werden.

Als organische hochmolekulare Substanzen werden genannt: Polyurethane, Vinylverbindungen und Copolymere wie Ethylen/Vinylacetat-Copolymere, Ethylen/Alkylacrylat-Copolymere, Styrol/Butadien/Acrylnitril-Copolymere und Styrol/Acrylnitril-Copolymere sowie Methylmethacrylat/Butadien/Styrol-Polymere.

Es ist auch möglich anorganische Füllstoffe in Mengen zuzufügen, die die mechanischen und physikalischen Eigenschaften der Zusammensetzungen gemäß der Erfindung nicht wesentlich beeinflußen, z. B. Glasfasern, Kohlefasern, Glaskugeln, Glimmer, Talkum, Kreide. Hinzugefügt werden können auch Antistatika oder elektrisch leitende Agenzien wie Leitfähigkeitsruße und andere Ruße, insbesondere Ruße mit groben Teilchen (ca. 90 µm).

### Beispiele

In der Tabelle werden neben den Zusammensetzungen gemäß der Erfindung (Beispiele 7, 8, 10 - 15) auch solche aus Polyoxymethylen mit verschiedenen bekannten Mattierungsmitteln angeführt. Die restlichen Beispiele, die unter Verwendung bisher bei POM eingesetzten Mittel durchgeführt wurden, stellen Vergleichsversuche dar.

Als Polyoxymethylen wurde ein Copolymerisat aus Trioxan und Ethylenoxid mit einem Schmelzindex MFI 190/2,16 von 13 g/10 min. eingesetzt. Als Schwarzkonzentrat diente eine Mischung aus einem Acetalcopolymer der gleichen Zusammensetzung (MFI 190/2,16 = 9 g/10 min.) und Acetogenruß HV (Hersteller: Hoechst AG, Frankfurt a. M., Bundesrepublik Deutschland). Das eingesetzte Polyurethan war ein aliphatisches Polyesterurethan auf Basis Adipinsäure und C₂-C₆-Diolen mit Hexamethylendiisocyanat.

Polyoxymethylen wurde mit den in der Tabelle aufgeführten Zuschlägen vermischt und in einem Doppelschneckenextruder Typ ZSK 53 (Firma Werner & Pleiderer, Stuttgart, Bundesrepublik Deutschland) bei einer Massetemperatur von 200 °C aufbereitet und in Granulatform gebracht. Aus dem erhaltenen Granulat wurden unter konstanten Bedingungen (Massetemperatur 200 °C, Werkzeugwandtemperatur 90 °C, Fließfrontgeschwindigkeit 200 mm/s) auf einer Spritzgußmaschine Typ KM 90/210 B (Firma Kraus-Maffei, München, Bundesrepublik Deutschland) Probekörper hergestellt, an denen unter Normbedingungen die folgenden Eigenschaften geprüft wurden.

| | |
|---|---|
| Schmelzindex MFI 190/2,16 | DIN 53735 |
| Streckspannung | DIN 53455 |
| Dehnung der Streckspannung | " |
| Reißdehnung | " |
| Biege-E-Modul | DIN 53457 |
| Kugeldruckhärte | DIN 53456 |
| IZOD-Kerbschlagzähigkeit | ISO 180/1A |
| Glanz | nach Gardner 60° |

Die Oberflächenbeschaffenheit wurde visuell beurteilt. Die angeführten Einsatzmengen sind Gewichtsteile. Die Ergebnisse sind in der Tabelle aufgeführt.

Die Angabe beim Schmelzindex "MFI 190/2" bedeutet stets "MFI 190/2,16".

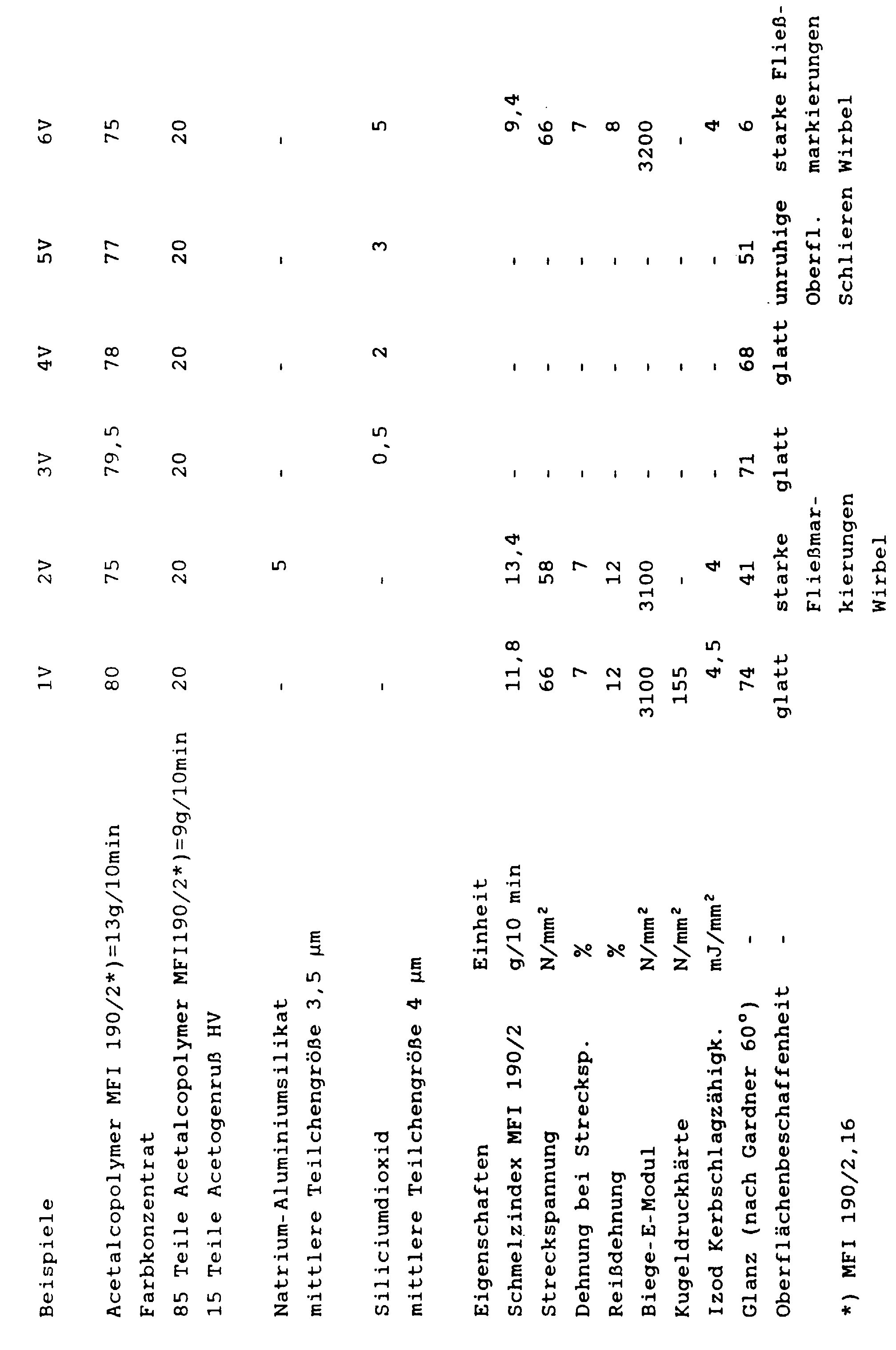

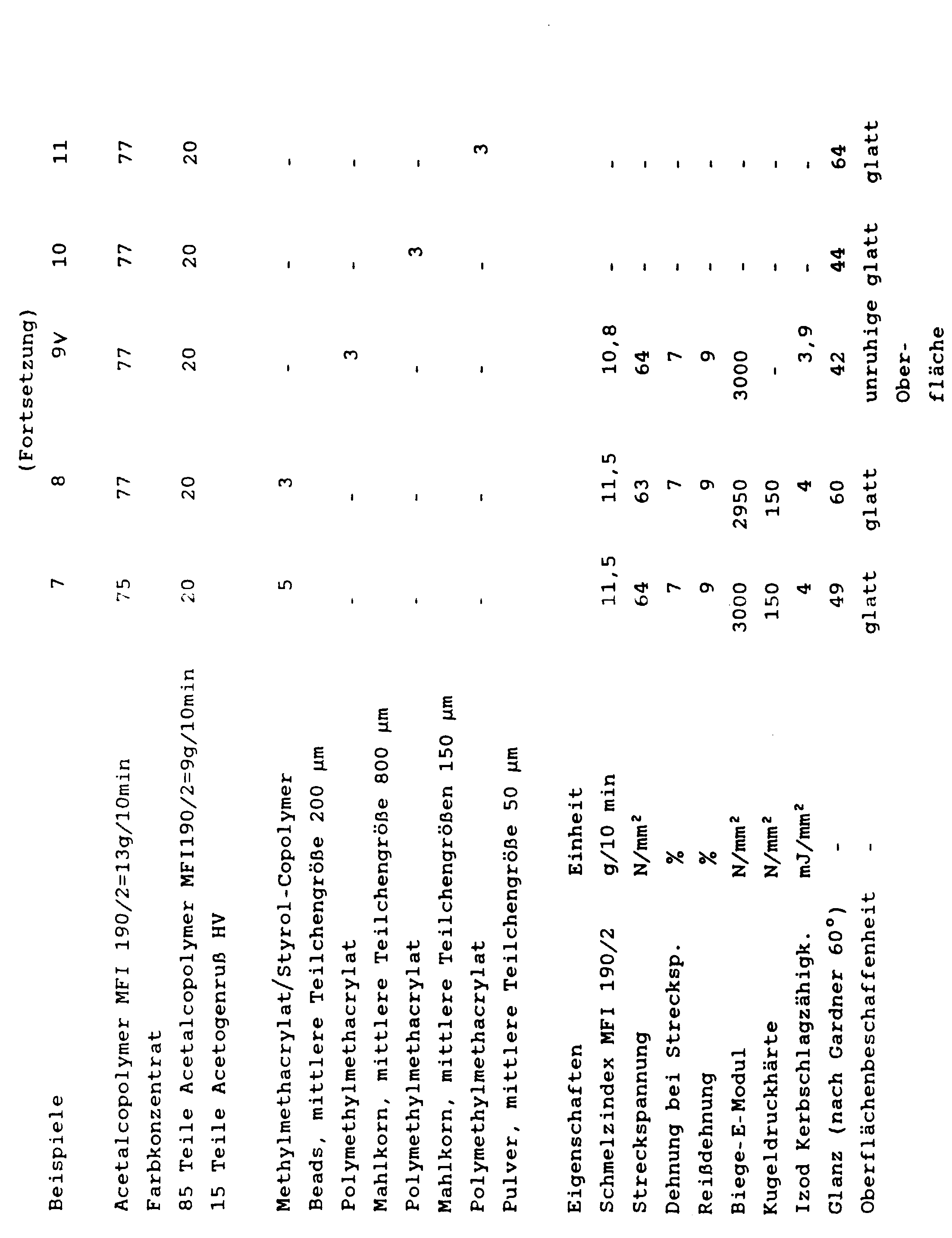

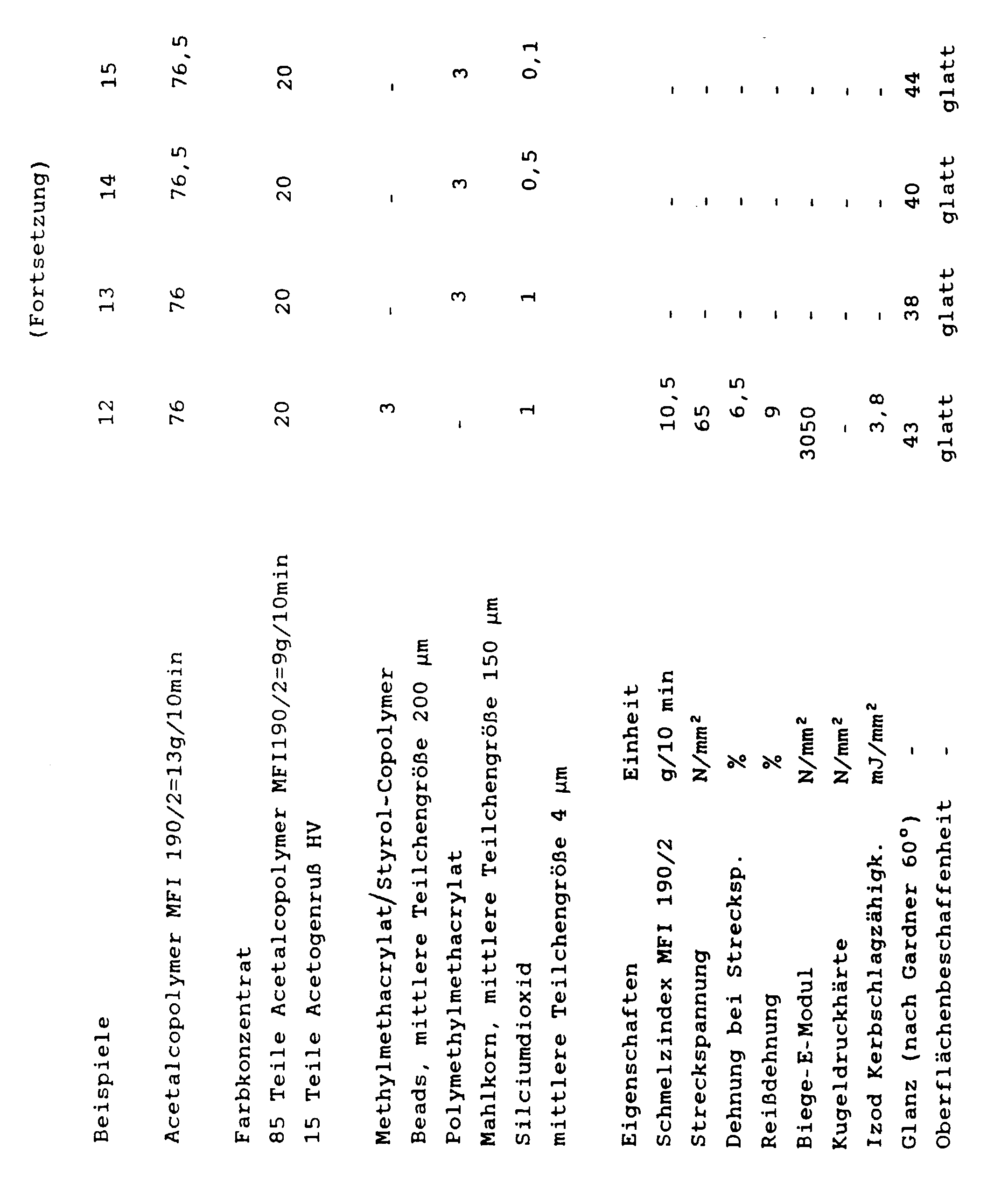

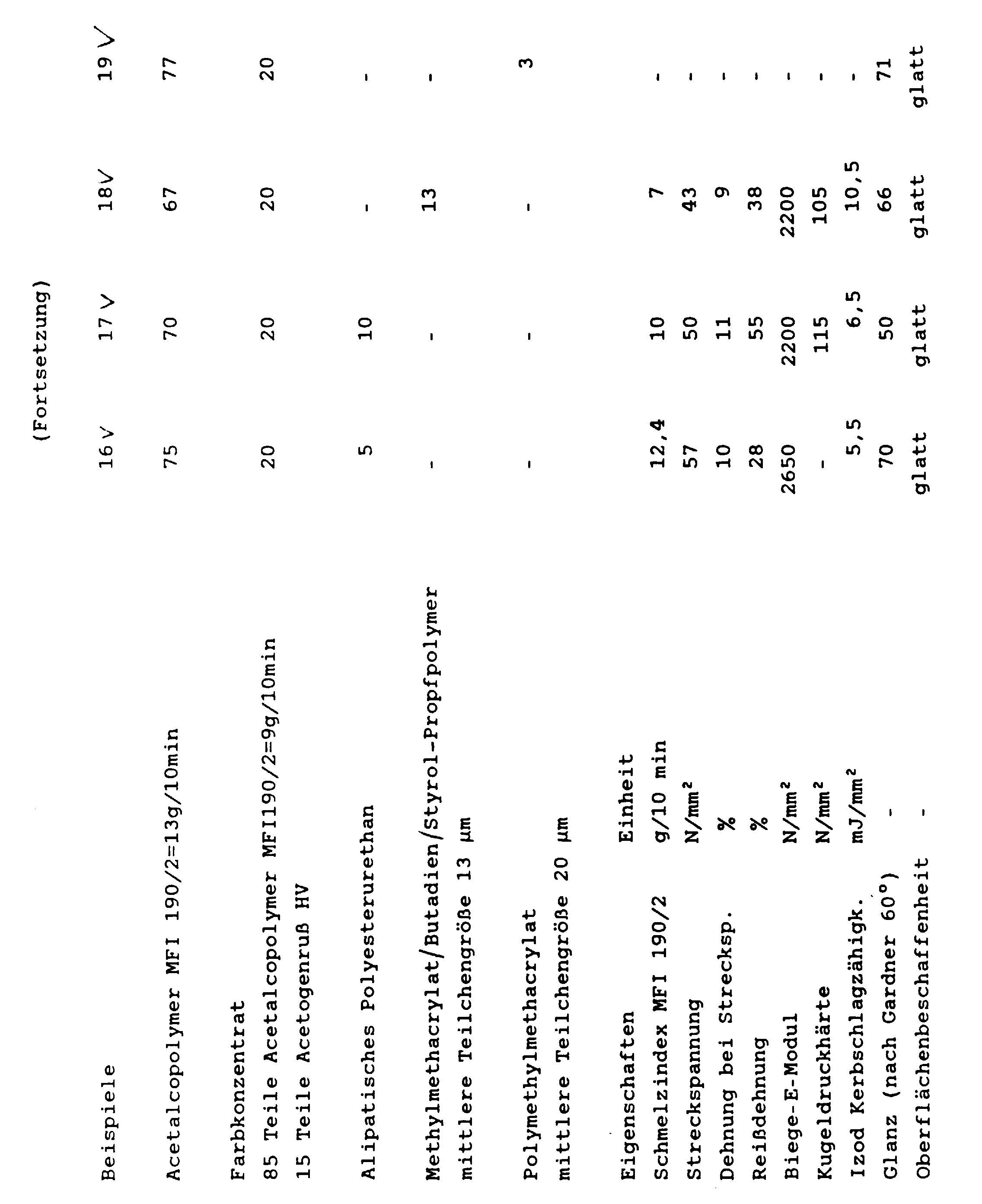

## Patentansprüche

1. Polyoxymethylenzusammensetzung, dadurch gekennzeichnet, daß sie aus A) Polyoxymethylen und B) 0,5 bis 10 Gew.-%, bezogen auf das Gesamtgemisch, Polymerisat mit einer mittleren Teilchengröße von 20 bis 600 pm besteht, wobei das Polymerisat mindestens ein Polymethyl-, -ethyl- und -butylmethacrylat oder ein Copolymerisat aus Methylmethacrylat und Styrol ist.

2. Zusammensetzung nach Anspruch 1, dadurch gekennzeichnet, daß das Polyoxymethylen aus mindestens 50 % wiederkehrenden -CH₂-O-Einheiten besteht.

3. Zusammensetzung nach Anspruch 1 oder 2, dadurch gekennzeichnet, daß die mittlere Teilchengröße des Polymerisats 20 bis 300 µm beträgt.

4. Zusammensetzung nach einem oder mehreren der Ansprüche 1 bis 3, dadurch gekennzeichnet, daß sie zusätzlich 0,1 bis 2, vorzugsweise 0,5 bis 1, Gew.-% Siliciumdioxid mit einer Teilchengröße von 3 bis 15, vorzugsweise 3 bis 5, µm enthält.

5. Zusammensetzung nach einem oder mehreren der Ansprüche 1 bis 4, dadurch gekennzeichnet, daß sie übliche Zusätze in geringen Mengen enthält.

6. Zusammensetzung nach einem oder mehreren der Ansprüche 1 bis 5, dadurch gekennzeichnet, daß sie gegebenenfalls Stabilisatoren, Formaldehydfänger, Antioxidantien, Lichtstabilisatoren, Gleitmittel, Farbstoffe, Pigmente, Ruße, organische hochmolekulare Substanzen und/oder anorganische Füllstoffe enthält.

7. Verwendung der Polyoxymethylenzusammensetzung nach einem oder mehreren der Ansprüche 1 bis 6 zur Herstellung von Formkörpern mit matter Oberfläche.

## Claims

1. A polyoxymethylene composition comprising A) polyoxymethylene and B) from 0.5 to 10% by weight, based on the total mixture, of polymer having a mean particle size of from 20 to 600 µm, the polymer being at least one polymethyl, polyethyl or polybutyl methacrylate or a copolymer of methylmethacrylate and styrene.

2. A composition as claimed in claim 1, wherein the polyoxymethylene comprises at least 50% of recurring -CH₂O- units.

3. A composition as claimed in claim 1 or 2, wherein the mean particle size of the polymer is from 20 to 300 µm.

4. A composition as claimed in one or more of claims 1 to 3, which additionally contains from 0.1 to 2% by weight, preferably from 0.5 to 1% by weight, of silicon dioxide having a particle size of from 3 to 15 µm, preferably from 3 to 5 µm.

5. A composition as claimed in one or more of claims 1 to 4, which contains conventional additives in small amounts.

6. A composition as claimed in one or more of claims 1 to 5, which may contain stabilizers, formaldehyde scavengers, antioxidants, light stabilizers, lubricants, dyes, pigments, carbon blacks, high-molecular-weight organic substances and/or inorganic fillers.

7. Use of a polyoxymethylene composition as claimed in one or more of claims 1 to 6 for the production of moldings having a matt surface.

## Revendications

1. Composition de polyoxyméthylène, caractérisée en ce qu'elle est constituée A) de polyoxyméthylène et B) de 0,5 à 10 % en poids, par rapport au mélange total, d'un polymère ayant une granulométrie moyenne de 20 à 600 µm, le polymère étant au moins un poly(méthacrylate de méthyle, d'éthyle et de butyle) ou un copolymère de méthacrylate de méthylène et de styrène.

2. Composition selon la revendication 1, caractérisée en ce que le polyoxyméthylène est constitué d'au moins 50 % de motifs -CH₂-O- répétitifs.

3. Composition selon la revendication 1 ou 2, caractérisée en ce que la granulométrie moyenne du polymère est de 20 à 300 µm.

4. Composition selon l'une ou plusieurs des revendications 1 à 3, caractérisée en ce qu'elle contient en outre de 0,1 à 2 et de préférence de 0,5 à 1 % en poids de dioxyde de silicium ayant une granulométrie de 3 à 15 et de préférence de 3 à 5 µm.

5. Composition selon l'une ou plusieurs des revendications 1 à 4, caractérisée en ce qu'elle contient des additifs usuels en de faibles quantités.

6. Composition selon l'une ou plusieurs des revendications 1 à 5, caractérisée en ce qu'elle contient éventuellement des stabilisants, des fixateurs de formaldéhyde, des antioxydants, des stabilisants à la lumière, des lubrifiants, des colorants, des pigments, des noirs de carbone, des substances organiques à grande masse moléculaire et/ou des charges minérales.

7. Utilisation de la composition de polyoxyméthylène selon l'une ou plusieurs des revendications 1 à 6 pour fabriquer des objets moulés ayant une surface mate.
